Europäisches Patentamt

European Patent Office

Office européen des brevets

(19)

(11) Numéro de publication: **0 151 055**
**B1**

(12) **FASCICULE DE BREVET EUROPEEN**

(45) Date de publication du fascicule du brevet: **31.08.88**

(51) Int. Cl.⁴: **C 25 C 7/00, C 25 C 7/02**

(21) Numéro de dépôt: **85400015.5**

(22) Date de dépôt: **07.01.85**

(54) Perfectionnements aux dispositifs de récupération galvanique de métaux en solutions diluées.

(30) Priorité: **09.01.84 FR 8400203**
**13.12.84 FR 8418992**

(43) Date de publication de la demande:
**07.08.85 Bulletin 85/32**

(45) Mention de la délivrance du brevet:
**31.08.88 Bulletin 88/35**

(84) Etats contractants désignés:
**BE CH DE FR GB IT LI NL SE**

(56) Documents cités:
**EP-A-0 079 058**
**EP-A-0 129 845**
**FR-A-2 390 516**
**GB-A-1 598 306**
**GB-A-2 052 559**
**US-A-3 859 195**
**US-A-4 097 347**
**US-A-4 367 127**

(73) Titulaire: **Heroguelle, Yves**
**3 Place Toulouse Lautrec**
**F-51100 Reims (FR)**

(72) Inventeur: **Heroguelle, Yves**
**3 Place Toulouse Lautrec**
**F-51100 Reims (FR)**

(74) Mandataire: **Loyer, Bertrand et al**
**Cabinet Pierre Loyer 77, rue Boissière**
**F-75116 Paris (FR)**

Courier Press, Leamington Spa, England.

## Description

La présente invention est relative à un dispositif destiné à la récupération galvanique de métaux en solutions diluées, comme par exemple les bains de lavage d'une installation de métallisation par électrolyse. Une installation de métallisation par dépôt électrolytique comprend toujours, outre les bains électrolytiques proprement dits, des bains de lavage dans lesquels sont trempées les pièces sortant des bains électrolytiques: à la longue, ces bains deviennent de plus en plus riches en métal dissous et il est donc avantageux de récupérer ce métal. Il est connu de réaliser cette opération par électrolyse au moyen d'une cathode poreuse qui est traversée par le bain d'où l'on veut extraire; le métal se dépose ainsi sur les parois de la cathode poreuse que l'on fait ensuite fondre.

Il est en particulier connu d'employer pour cela des éponges en mousse de polyester à cellules ouvertes qui sont au préalable métallisées en surface afin d'être conductrices. On fait alors passer le liquide chargé de métal en solution à travers ces éponges en utilisant celles-ci comme cathode. Le métal se dépose sur les parois de ces éponges qui sont ensuite grossièrement broyées et portées à haute température. La matière plastique est mise à l'état gazeux et le métal récupéré est fondu en se mélangeant au métal qui couvrait les parois de cellules des éponges au début de l'opération.

Cependant, il s'avère souvent que les produits dans lesquels le métal est dissout, le cyanure par exemple, démétallisent la partie centrale de l'éponge avant que le métal à récupérer n'ait eu le temps de former un dépôt de sorte que seules les couches extérieures des éponges demeurent conductrices de courant. Dans ce cas, le rendement de l'installation est très faible.

Dans le brevet GB 1.598.306, on a décrit un dispositif de récupération galvanique comportant une cathode constituée par un sac cylindrique creux rempli de fibres de carbone. Du fait que ces fibres de carbone constituent un matelas, le rendement peut s'avérer insuffisant au point de vue électrolytique.

La présente invention a pour objet une installation de ce type, caractérisée par une structure de cathode, telle qu'elle est définie dans la partie caractérisante de la revendication 1.

Des modes de réalisation particuliers de l'installation selon l'invention font l'objet des revendications 2 à 9.

Le dispositif peut avantageusement être constitué par un bac cylindrique à l'intérieur duquel sont disposées deux anodes concentriques, une anode centrale et une anode périphérique, entre lesquelles est disposée une cathode constituée par un treillis métallique fin disposé contre un grillage en matière plastique, l'arrivée de la solution se faisant le long de l'anode extérieure et l'évacuation de la solution par centre du bac.

De préférence, la cathode est constituée par un enroulement en spirale, de façon à former un rouleau cylindrique creux, d'une nappe de treillis métallique en fil de cuivre, appliquée contre un grillage en matière plastique à larges mailles.

Le dispositif peut également être constitué par un bac longitudinale comprenant une entrée pour la solution à une extrémité et une sortie à l'autre extrémité, une pluralité d'électrodes, alternativement positives et négatives constituées par un treillis métallique fin monté sur un grillage en matière plastique étant interposées en travers de l'écoulement de la solution.

Dans ce cas, la cathode est avantageusement constituée par des matelas de nappes de treillage métallique fin emprisonnés entre des grillages en matière plastique et les cathodes sont disposées entre des anodes non perméables placées en chicane.

A titre d'exemples non limitatifs et pour faciliter la compréhension de l'invention, on a représenté aux dessins annexés:

Figure 1, une vue schématique, en plan, en coupe partielle, d'un premier mode de réalisation de l'invention;

Figure 2, une vue schématique en plan, d'un deuxième mode de réalisation;

Figure 3, une vue schématique en plan illustrant une installation comprenant un bac analogue à celui de la figure 1;

Figure 4, une vue en perspective d'une cathode constituée par un enroulement cylindrique;

Figure 5, une vue en perspective d'un anneau de connexion destiné à la cathode selon la figure 5;

Figure 6, une vue schématique à très grande échelle illustrant le dépôt de métal sur les fils de la cathode;

Figure 7, une vue schématique en élévation d'un dispositif correspondant à la figure 2 muni de cathodes en matelas;

Figure 8, un diagramme comparatif illustrant le rendement d'une cathode selon la figure 1.

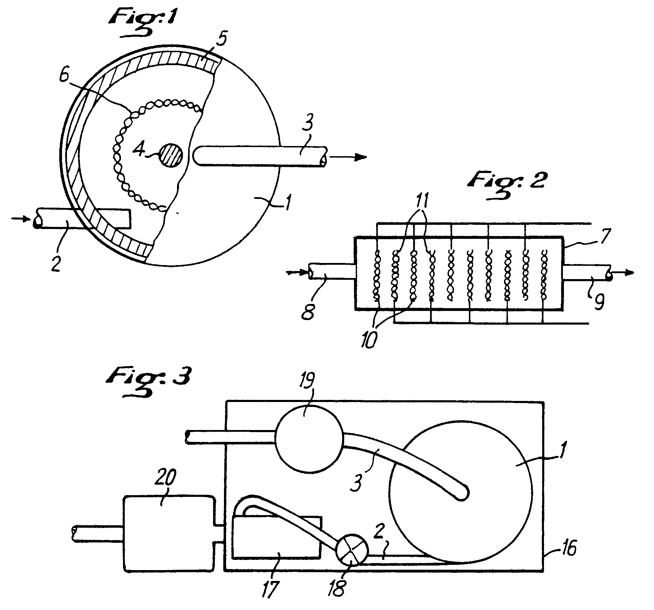

En se reportant à la figure 1, on voit que selon un premier exemple, le bac de récupération galvanique est un bac cylindrique 1 muni d'une canalisation d'entrée 2, de préférence tangentielle et d'une canalisation de sortie 3. A l'intérieur de ce bac, sont disposées trois électrodes, à savoir une anode centrale 4, une anode cylindrique, périphérique 5 et une cathode 6 disposée entre les deux anodes 4 et 5. La canalisation d'arrivée 2 débouche à l'intérieur de l'anode périphérique 5 de sorte que la solution ne doit traverser que le cathode 6 qui seule doit être perméable, les anodes 4 et 5 pouvant ne pas l'être. La cathode 6 est constituée par un treillage métallique fin, par exemple, en fil de suivre maillé ayant un diamètre de l'ordre du 1/10 mm. Ce treillage n'ayant aucune résistance mécanique doit être rigidifié par un support inerte qui peut avantageusement être constitué par un grillage en matière plastique, où toute matière isolante suffisamment poreuse pour être facilement traversée par la solution tout en étant suffisamment rigide pour maintenir en forme le treillage métallique.

D'autre part, au lieu d'un fil métallique maillé, on peut employer toute structure tissée, extrudée ou encore du métal déployé.

On peut également employer plus de deux anodes concentriques, mais dans ce cas, il faut qu'au moins les anodes intermédiaires soient perméables: elles peuvent dans ce cas être constituées comme la cathode 6, mais puisqu'elles ne reçoivent pas de dépôt métallique, elles peuvent être en grillage autoportant.

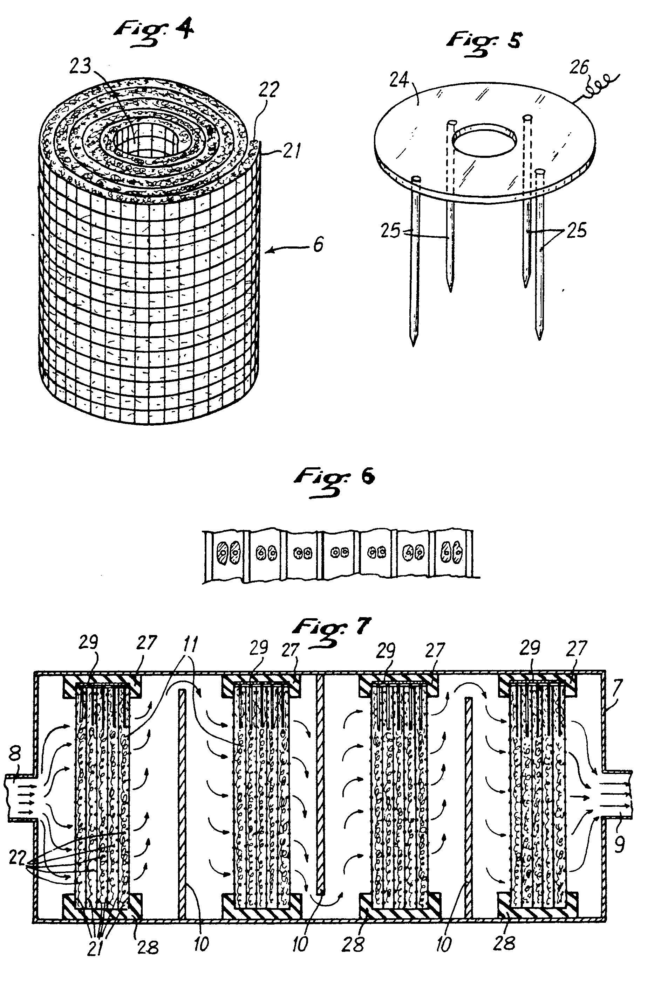

La figure 4 représente le cathode cylindrique 5 qui est réalisée par un enroulement en spirale d'un treillis métallique qui n'ayant aucune rigidité mécanique doit être maintenu en forme par un grillage en matière plastique.

Pour réaliser cette cathode 6, on pose à plat une bande de grillage 21 en matière plastique assez épais (environ 1,5 mm) ayant une largeur d'environ 250 mm et une longueur d'environ 7 mètres; sur cette bande, on pose une bande métallique 22 constituée d'une ou plusieurs épaisseurs de tricot en fil de cuivre ayant un diamètre compris entre 1/10 et 4/10 de millimètres, cette bande ayant les mêmes dimensions que celles du grillage plastique et on enroule le tout de façon à obtenir un rouleau tubulaire, c'est-à-dire qu'il comporte un orifice cylindrique 23 à sa partie centrale. Ce rouleau, du fait de la spirale en grillage plastique a une parfaite tenue mécanique et comporte entre les boucles spiralées de ce grillage une sorte de matelas métallique continu en fil très fin qui est ainsi très facilement traversé perpendiculairement par la solution tout en présentant une surface de contact importante.

Cette cathode cylindrique est alors mise en place dans l'appareil décrit à la figure 1, c'est-à-dire qu'elle esh placée à l'intérieur d'une anode circulaire 5 qui l'entoure, tandis que l'anode centrale 4 vient à l'intérieur de l'espace cylindre central 23 de la cathode 6.

En se reportant à la figure 5, on voit que l'organe de connexion électrique de la cathode 6 de la figure 1 est constitué par une couronne métallique 24 ayant même diamètres externe et interne que la cathode 6. A cette couronne sont attachées une pluralité d'aiguilles conductrices 25 qui sont à des distances différentes du centre de la couronne 24 de façon que le courant soit amené dans toute la masse de la cathode. La couronne 24 est reliée à conducteur de courant 26.

On obtient ainsi une cathode qui a des qualités exeptionnelles puisqu'avec une cathode comportant 220 g de cuivre, on a obtenu un dépôt d'argent tel qu'à la fin de l'opération, ladite cathode pesait 4,820 g., soit 4,600 d'argent. En faisant fondre cette cathode, on a obtenu de l'argent à 95,43% de pureté. Dans ce essai, la teneur finale de l'électrolyte n'était plus que de 2 ppm. Au cours de la fusion, la matière plastique est calcinée sans se mélanger au métal.

La figure 8 représente la courbe de la diminution de la teneur en or solution purifiée avec un appareil selon la présente invention. Dans cet essai le bain d'or avait un Ph de 8,0, un volume de 123 litres, une concentration initiale de 3,3 g/litre, la pompe débitant 550 l/h et l'intensité étant de 8 ampères. La courbe en trait plein correspond à l'appareil selon l'invention et la courbe en tireté correspond à un appareil connu à cathode poreuse en mousse de polyester.

La première phase de 20 heures montre un fonctionnement sensiblement analogue des deux appareils; après 20 h de fonctionnement quand la concentration du bain devient basse, c'est-à-dire inférieure à 200 mg/l, on voit que la différence devient très sensible la teneur de 2 mg/l étant atteinte au bout de 40 heures au total avec l'appareil selon l'invention alors qu'elle est encore de l'ordre de 70 mg/l à ce moment là, au bout de 40 heures pour l'appreil de type connu.

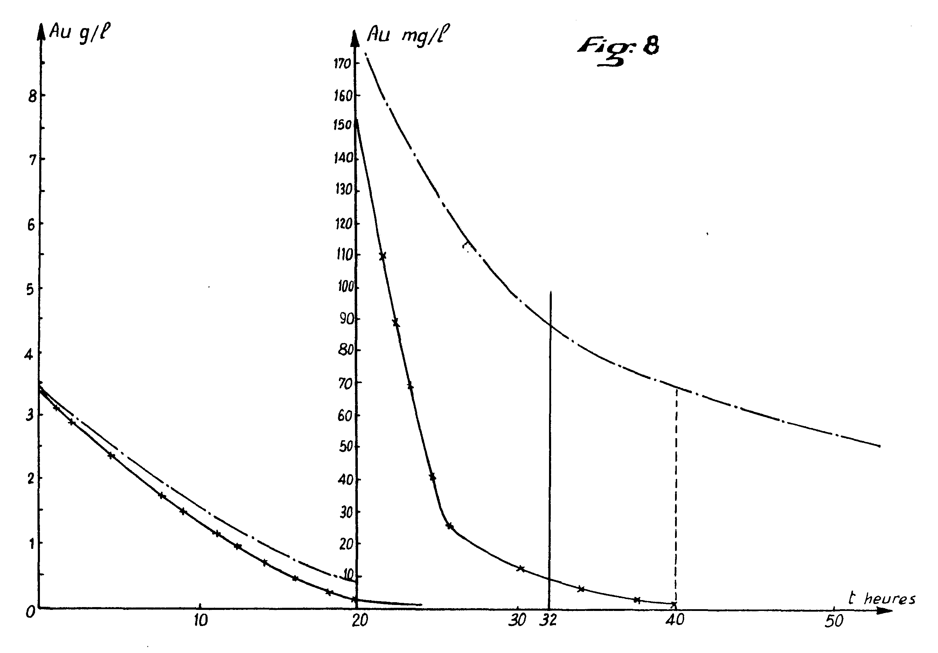

D'autre part, il s'est avéré à l'usage que par un phénomène sans doute analogue à celui connu des spécialistes sous le nom de la cathode masquée, les diverses couches de grillage inertes qui se trouvent enfermées dans la masse de l'électrode font masque et favorisent le dépôt de métal au coeur même de la masse de l'électrode comme cela est représenté de façon schématique à la figure 6 alors que dans les cathodes de type connu, même les cathodes poreuses, il n'y a de dépôt que sur les parois extérieures de la cathode.

En se reportant à la figure 2, on voit que selon un deuxième exemple, le bac peut être constitué par une enceinte parallélépipédique 7 munie à une extrémité d'une canalisation d'arrivée 8 de la solution et à l'extrémité opposée d'une canalisation de sortie 9. Entre les deux, sont disposées une pluralité d'électrodes planes, perméables, traversées perpendiculairement par le liquide allant de la canalisation 8 à la canalisation 9, ces électrodes étant alternativement des anodes 10 et des cathodes 11.

Selon une variante de réalisation représentée à la figure 7, les anodes 10 sont imperméables et disposées en chicane de façon à laisser des passages situés alternativement en haut et en bas de l'enceinte 7 de façon à obliger le liquide à suivre un parcours sinueux. Par contre les cathodes 11 sont perméables et traversées prependiculairement par la solution comme cela est représenté à la figure 7. De façon analogue à ce qui est représenté à la figure 4, les cathodes 11 sont chacune constituées par des couches de bandes de fil de cuivre maillé dont le diamètre est compris entre 1/10 et 4/10 de mm, ces couches étant emprisonnées entre des grilles 21 en matière plastique.

De préférence également, les différentes grilles 21 entre lesquelles sont emprisonnées le couches 22 de fil de cuivre maillé sont maintenues par des supports supérieurs 27 et inférieurs 28 qui sont en matière non conductrice et à l'intérieur desquels sont disposées des lames métalliques conductrices 29. Chaque lame 29 est solidaire d'une pluralité d'aiguilles métalliques 30 qui pénètrent dans les diverses couches 22 de fils de cuivre maillés. De plus, chaque lame 29 fait saillie à l'extérieur de l'enceinte 7 sur un des côtés et les extrémités saillantes de toutes ces lames sont reliées électriquement à une barre d'alimentation commune.

La figure 3 représente une installation complète de récupération galvanique comprenant: un châssis 16 à l'intérieur duquel sont disposés une pompe 17, une vanne 18, le bac 1 de la figure 1, un filtre 19 sur la canalisation de sortie 3 et un bac d'amorçage 20 disposé en amont de la pompe 17.

Il est bien évident que les dispositifs, selon la présente invention, ne sont pas limitativement destinés à la récupération du métal dilué dans des bacs de lavage d'installation de métallisation par galvanoplastie mais peuvent être employés pour toute récupération par voie galvanique de métaux dilués dans une solution, par exemple des bains de révélateurs de clichés radiographiques et de tous bains électrolytiques, en vue de l'épuration des eaux résiduaires pour être en conformité avec les règles de concentration métalliques en métaux lourds avant rejet.

Grâce aux dispositions décrites, du fait que la (ou les) cathodes est réalisée en un fil très fin, le titrage du métal récupéré est, après fusion, très élevé parce que ne comportant qu'une faible proportion du métal dont est constituée la cathode.

## Revendications

1. Dispositif de récupération galvanique de métaux en solution diluée aux moyens d'électrodes perméables, traversées par la solution diluée, lesdites électrodes étant ensuite fondues lorsqu'elles sont recouvertes de métal, caractérisé par le fait que la cathode (6) est constituée par une superposition de couches d'un treillis métallique et d'un grillage isolant, le treillis métallique étant en fil de 1/10 à 4/10 de millimètre et à mailles larges, le grillage isolant ayant une épaisseur d'environ 1,5 mm.

2. Dispositif selon la revendication 1, caractérisé par le fait que chaque couche de treillis métallique comporte plusieurs épaisseurs.

3. Dispositif selon la revendication 2, caractérisé par le fait qu'il comporte une cathode (6) constituée par un enroulement cylindrique d'une nappe constituée par une bande de grillage (21) en matière plastique et une bande de tricot de cuivre (22) en une ou plusieurs épaisseurs, l'enroulement étant réalisé de façon à ménager à l'intérieur du cylindre un trou cylindrique central (23) de façon à pouvoir enfiler ladite cathode cylindrique (6) sur une anode centrale (4) et à l'intérieur d'une anode périphérique (5).

4. Dispositif selon la revendication 3, comportant un bac (1) muni d'une canalisation tangentielle (2) d'entrée et d'une canalisation centrale (3) de sortie de ladite solution diluée.

5. Dispositif selon la revendication 4, dans lequel l'organe de connexion électrique de la cathode (6) est constitué par une couronne métallique (24) ayant mêmes diamètres externe et interne que ladite cathode (6) et munie d'une pluralité d'aiguilles conductrices (25) situées à des distances différentes du centre de la couronne (24).

6. Dispositif selon la revendication 2, caractérisé par le fait qu'il comporte une cathode (11) constituée par une succession d'épaisseurs d'une bande constituée par un tricot métallique (21) avec interposition à l'intérieur de chaque épaisseur d'un grillage isolant (22); ladite cathode étant placée dans un bac parallélépipédique (7) muni à une extrémité d'une canalisation d'amenée (8) et à l'autre d'une canalisation de sortie (9) de ladite solution diluée.

7. Dispositif selon la revendication 6, caractérisé par le fait qu'il comporte une succession d'anodes (10) planes et non perméables disposées entre les cathodes (11).

8. Dispositif selon la revendication 7, dans lequel les ensembles d'épaisseurs de tricot métallique (21) et de grilles (22) sont maintenus assembliés par des supports inférieurs (28) et supérieurs (27), ces derniers renfermant des lames conductrices (29) reliées à une barre d'alimentation continue.

9. Dispositif selon l'une quelconque des revendications précédentes, caractérisé par le fait qu'il comporte une vanne (18) permettant de réguler le débit d'une pompe d'alimentation (17) de ladite solution diluée.

## Patentansprüche

1. Vorrichtung zur galvanischen Gewinnung von Metallen aus verdünnten Lösungen mit Hilfe von durchlässigen Elektroden, die von der verdünnten Lösung durchströmt werden, wobei die Elektroden aufgelöst werden, während sich das Metall auf ihnen niederschlägt, dadurch gekennzeichnet, daß die Kathode (6) aus einer Überlagerung von Schichten eines Metallgitters und eines Isoliergitters gebildet ist, wobei das Metallgitter aus Draht mit einer Dicke von 1/10 bis 4/10 mm und weiten Maschen besteht und das Isoliergitter eine Dicke von ca. 1,5 mm aufweist.

2. Vorrichtung gemäß Anspruch 1, dadurch gekennzeichnet, daß jede Schicht des Metallgitters verschiedene Dicken aufweist.

3. Vorrichtung gemäß Anspruch 2, dadurch gekennzeichnet, daß diese eine Kathode (6) aufweist, die aus einer zylindrischen Spule mit aufgewickeltem Material besteht, das aus einem Gitterstreifen (21) aus Kunststoff und einem Streifen aus Kupfergewebe (22) mit einer oder mehreren Dikken zusammengesetzt ist, wobei die aufgerollte Spule derart ausgebildet ist, daß sich im Innern des Zylinders eine zylindrische zentrale Öffnung (23) ergibt, mittels der die zylindrische Kathode (6) auf einer Mittenanode (4) gehalten und gleichzeitig in eine Randanode (4) einführbar ist.

4. Vorrichtung gemäß Anspruch 3, bestehend aus einem Behälter (1), der ein tangential angeordnetes Einlaufrohr (2) und ein zentral angeordnetes Auslaufrohr (3) für die verdünnte Lösung aufweist.

5. Vorrichtung gemäß Anspruch 4, bei der der elektrische Stromanschluß für die Kathode (6) aus einer metallische Krone (24) besteht, die denselben Außen- und Innendurchmesser aufweist wie die Kathode (6), und die mit einer Vielzahl von Leiterstiften (25) versehen ist, die verschieden weit vom Zentrum der Krone (24) entfernt angeordnet sind.

6. Vorrichtung gemäß Anspruch 2, dadurch gekennzeichnet, daß sie aus einer Kathode (11) besteht, die aus einer Reihe verschiedener Schichten aus Metallgewebe (21) zusammengesetzt ist, wobei sich zwischen jeder Schicht ein Isoliergitter (22) befindet; die Kathode ist in einem Behälter mit parallelen Seiten (7) angeordnet, der an den gegenüberliegenden Enden eine Einlaßleitung (8) und eine Auslaßleitung (9) für die verdünnte Lösung aufweist.

7. Vorrichtung gemäß Anspruch 6, dadurch gekennzeichnet, daß sie eine Reihe von flachen Anoden (10) aufweist, die nicht durchlässig und zwischen den Kathoden (11) angeordnet sind.

8. Vorrichtung gemäß Anspruch 7, bei der die verschiedenen Metallgewebeschichten (21) und die Gitter (22) durch untere bzw. obere Halterungen (28 bzw. 27) gehalten sind, wobei die letzteren Leiterlamellen (29) einschließen, die von einer Gleichstromquelle über eine Schiene mit Strom versorgt werden.

9. Vorrichtung gemäß einem beliebigen Patentanspruch, dadurch gekennzeichnet, daß diese ein Ventil (18) aufweist, mit der der Förderstrom einer Pumpe (17) für die verdünnte Lösung regulierbar ist.

**Claims**

1. A device for the galvanic recovery of metals from dilute solutions by means of permeable electrodes through which the dilute solution passes, said electrodes then being melted when they are covered with metal, characterised by the fact that the cathode (6) is constituted by superposition of layers of metal lattice and an insulating netting, the metal lattic being of 1/10th to 4/10th of a millimetre wire and having a large mesh, the insulating netting having a thickness of about 1.5 mm.

2. A device according to Claim 1, characterised by the fact that each layer of metal lattice has several plies.

3. A device according to Claim 2, characterised by the fact that it has a cathode (6) constituted by a cylindrical winding of a sheet constituted by a strip of plastic netting (21) and a strip of copper mesh (22) in one or plies, the winding being carried out in a manner such as to form within the cylinder a central cylindrical hole (23), such that said cylindrical cathode (6) can be drawn onto a central anode (4) and within a peripheral anode (5).

4. A device according to Claim 3, having a tank (1) provided with a tangential inlet pipe (2) and a central outlet pipe (3) for said dilute solution.

5. A device according to Claim 4, in which the electrical connection member for the cathode (6) is constituted by a metal ring (24) having the same external and internal diameters as said cathode (6) and provided with a plurality of conducting needles (25) located at different distances from the centre of the ring (24).

6. A device according to Claim 2, characterised by the fact that it has a cathode (11) constituted by a succession of plies of a strip constituted by a metal mesh (21), an insulating netting (22) being interposed within each ply, said cathode being placed in a parallelepipedic tank (7) provided at one end with an inlet pipe (8) and at the other with an outlet pipe (9) for said dilute solution.

7. A device according to Claim 6, characterised by the fact that it has a succession of flat and non-permeable anodes (10) located between the cathodes (11).

8. A device according to Claim 7, in which the assemblies of the plies of metal mesh (21) and netting (22) are held together by lower supports (28) and upper supports (27), the latter enclosing conducting strips (29) connected to a continuous supply bar.

9. A device according to any one of the preceding claims, characterised by the fact that it has a valve (18) enabling the output of a supply pump (17) for said dilute solution to be regulated.

*Fig:1*

*Fig:2*

*Fig:3*

1

Fig. 4

Fig. 5

Fig. 6

Fig. 7

*Fig. 8*

0 151 055